# EUROPEAN PATENT APPLICATION

(11) **EP 3 219 696 A1**
(43) Date of publication of application: **20.09.2017**
(21) Application number: 16160157.0
(22) Date of filing: 14.03.2016
(51) Int. Cl.: C04B 41/89, C04B 41/91, C04B 41/00, C04B 41/45, C04B 41/52, C23C 4/18, C23C 28/04

(54) **CMC WITH OUTER CERAMIC LAYER**

(71) Applicant: Siemens Aktiengesellschaft, 80333 München (DE)
(72) Inventor: Flores Renteria, Arturo, 12161 Berlin (DE); Subramanian, Ramesh, Oviedo, 32765 (US); Van der Laag, Niels, 81369 München (DE)

(57) **Abstract**

By cutting a surface of a CMC component which has to receive a TBC a rough surface is yielded, which is rough enough to have a good adhesion of a following ceramic coating.

## Description

The invention relates to a ceramic layer for CMC.

Oxide based Ceramic Matrix Composites (CMCs) provide a higher temperature capability (∼1423K) than superalloys (∼1273K) and superior oxidation resistance. The limited fracture resistance and damage tolerance of ceramic materials is substantially improved by the fiber reinforcement.

However, the load bearing capacity (mechanical strength) of these OX-OX CMCs is also limited by grain growth and reaction processes with the matrix and/or the environment at 1423K and higher. With firing temperatures as high as 1873K - 1973K, oxide-oxide CMCs need thermal barrier coatings (TBC) that maintain CMCs above 1423K.

It is therefore the aim of the invention to overcome the above referenced problems.

The task is solved by a CMC part with a TBC or a part with a CMC component with a TBC according to claim 1.

In the following subclaims further advantages are listed, wherein the features of the subclaims can be arbitrarily combined with each other to yield further advantages.

The proposed invention highlights the engineered architecture of a thermal barrier coating for a better adhesion and emergency running conditions. Better adhesion is achieved by:
(a) increasing mechanical interlocking between CMC and TBC and also
(b) reducing thermal expansion mismatch between CMC and TBC. CMC can be used to its full potential, only if the coating can be integrated in to the system design.

For oxide-oxide CMCs, application of the thermal barrier was achieved by a FGI (Friable Graded Insulation) system. FGI was co-processed along with CMC, however, currently the hollow spheres needed for this coating system are not commercially available. In addition, the capability of the coating to recession at high surface temperatures (1873K - 1973K) is not expected to match behavior of zirconia based materials.

The description and the figures are only examples of the invention.

Application of plasma sprayed coating on an unmodified CMC surface is not easy. Depending upon the local macro roughness of the ceramic fibers and matrix infiltration characteristics, the adhesion of plasma sprayed coatings is poor.
It was tried to grid blasting in order to roughen the surface, but without effect.

Therefore the invention proposes to use a cutted surface on which a ceramic bond coat is applied.

The proposed invention embodiments provide significant improvements in the ability for plasma sprayed coatings to adhere to a CMC substrate.

The key advantage for this approach is the utilization of cost-effective thermal spray processes for deposition of the thermal barrier coating and a interface layer, especially a dense interface layer, which enable rough ceramic bond coats with alumina, mullite or any suitable ceramic material.

These concepts are applicable to all TBC compositions known to the skilled in art: single layer 8YSZ, 20YSZ, bilayer: YSZ pyrochlore, YSZ - 48YSZ, YSZ - 20YSZ, ... and modifications thereof.

Reliability of TBC adhesion is critical for the CMC/TBC functionality to meet gas turbine hot section components.

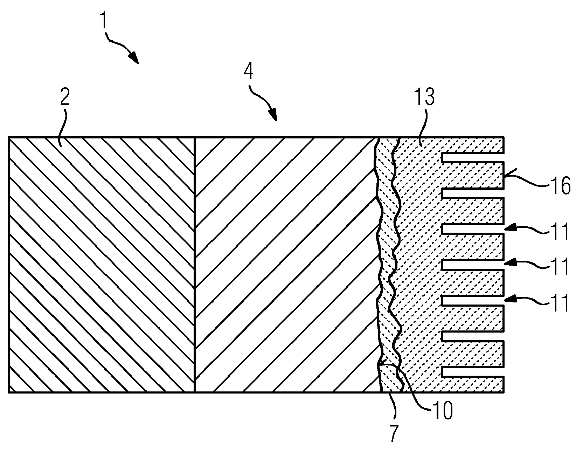

The figure shows a CMC part 4 or a part 1, which comprises a CMC component 4.

A part 1, preferably with a metallic core 2, is protected by a CMC component 4.

CMC components 4 or parts 1 are state of the art and well known.

As a cutting technology preferably a water beam cutting or laser beam cutting is preferably used. By this cutting method a roughened surface 10 of the CMC component 4 or CMC part 4 is generated.

Preferably the machined surface 10 was cut perpendicular to the longitudinal direction of the fibers of the CMC part 4 or the CMC component 4.

On this rough surface 10 preferably an alumina or a mullite coating is applied, which is preferably dense and has preferably a porosity lower then 5%.

Any ceramic material can be used which shows a thermal expansion match with an outer TBC layer 13 and CMC.

Preferably a plasma sprayed coating method is used to apply the ceramic coatings 7, 13.

This proceed ceramic bond coat 7 has therefore also a macro rough surface.

Furthermore, the outer TBC layer 13 preferably have engravings 11, which are produced after applying the TBC layer 13, especially by a laser engraving or is produced during production like dense vertical cracked TBC's (DVC) which are also state of the art.

## Claims

1. CMC part (4) or
a part (1) with a CMC component (4),
wherein the CMC part (4) or part (1) with a CM component (4) has an outer surface (10),
which was generated by a cutting method,
especially by water beam cutting,
wherein any suitable ceramic bond coat (7), an alumina or a mullite bond coat (7) is applied on this machined outer surface (10) and
wherein as an outermost surface a ceramic thermal barrier coating (13) is present on this ceramic bond coat (7), which is different to the ceramic bond coat (7),
which (13) has especially engravings (11) in the surface (16),
which are very especially produced by a laser.

2. CMC part (4) or part (1) with a CMC component (4) according to claim 1,
wherein the ceramic bond coat (7) is produced by plasma spraying.

3. CMC part (4) or part (1) with a CMC component (4) according to one or both of the claims 1 or 2,
wherein the ceramic thermal barrier coating (13) has the composition of a partially stabilized zirconia, especially YSZ
or
has a ceramic bilayer system of
an underlying, partially stabilized zirconia with an outer fully stabilized zirconia,
especially 8YSZ-20YSZ
or
a ceramic bilayer with an underlying partially stabilized zirconia (ZrO₂) and a pyrochlore material as an outermost layer of the ceramic bilayer.

4. CMC part (4) or part (1) with a CMC component (4) according to one or any of the claims 1, 2 or 3,
wherein the machined outer surface (10) was cut perpendicular to the longitudinal direction of the fibers of the CMC part (4) or CMC component (4).

5. CMC part (4) or part (1) with a CMC component (4) according to one or any of the claims 1, 2, 3 or 4, wherein the outer ceramic barrier coating (13) has engravings (11),
especially made by a laser.

6. CMC part (4) or part (1) with a CMC component (4) according to one or any of the claims 1, 2, 3, 4 or 5, has a dense alumina, a mullite or a ceramic bond coat (7), especially has a porosity lower than 5%vol%.
